# EUROPÄISCHE PATENTSCHRIFT

(11) **EP 1 009 972 B1**
(45) Veröffentlichungstag und Bekanntmachung des Hinweises auf die Patenterteilung: **06.05.2004**
(21) Anmeldenummer: 97922997.8
(22) Anmeldetag: 07.05.1997
(51) Int. Cl.: G01D 5/14

(54) **VORRICHTUNG ZUM ERFASSEN ROTATORISCHER BEWEGUNGEN**
DEVICE FOR DETECTING ROTARY MOVEMENTS
DISPOSITIF POUR LA DETECTION DE MOUVEMENTS GIRATOIRES

(30) Priorität: 11.05.1996 DE 19619144
(43) Veröffentlichungstag der Anmeldung: 21.06.2000
(73) Patentinhaber: Valeo Schalter und Sensoren GmbH, 74321 Bietigheim-Bissingen (DE)
(72) Erfinder: SINN, Alexandra, 74214 Schöntal (DE); GRABMAIER, Anton, 74321 Bietigheim-Bissingen (DE)
(74) Vertreter: Dreiss, Fuhlendorf, Steimle & Becker
(86) Internationale Anmeldenummer: PCT/EP1997/002330
(87) Internationale Veröffentlichungsnummer: WO 1997/043602

(56) Entgegenhaltungen:
- EP-A- 0 325 787
- DE-A- 4 123 131
- US-A- 5 164 668

## Beschreibung

Die Erfindung betrifft eine Vorrichtung zum Erfassen rotatorischer Bewegungen, mit den Merkmalen des Oberbegriffs des Anspruchs 1 oder 13.

Vielfach ist es wichtig, die Drehbewegung eines Körpers bzw. die Größe seines Drehwinkels zu bestimmen. Aus der DE-A-40 14 885 ist es beispielsweise bekannt, einen Körper, dessen Drehwinkel gemessen werden soll, mit einem Magneten zu verbinden und einen ortsfest angeordneten Magnetsensor dem sich drehenden Magnetfeld auszusetzen. Da der zu bewegende Permanentmagnet eine hinreichende Feldstärke haben muss, hat eine derartige Messeinrichtung einen beträchtlichen Bauumfang.

Hinzu kommt, dass das zu messende Magnetfeld sehr stark vom Abstand zwischen dem Permanentmagneten und dem Magnetsensor abhängt. Als nachteilig wird angesehen, dass Abweichungen des Geberelements, hier insbesondere des Permanentmagneten, von seiner idealen Form, von seiner idealen axialen Position zu dem Magnetdetektor und Abweichungen des Geberelementes von der vorgesehenen Drehachse erheblichen Einfluss auf die Messergebnisse haben. Weiterhin kann auch eine etwas asymmetrische Magnetisierung des Permanentmagneten zu einer starken Beeinflussung des auf den Magnetdetektor bzw. Sensor einwirkenden Magnetfeldes und somit zu einer unerwünschten Änderung des Ausgangssignals des Detektors führen. Weiterhin sind die bekannten Vorrichtungen, wenn sie hinreichend genau gearbeitet werden müssen, relativ teuer.

Aus der US-A-5,164,668 ist ein Drehwinkelsensor bekannt, bei dem ein scheibenförmiger Magnet von einem Joch umgeben ist. Beim Sensor der DE-A-41 23 131 ist der Magnet von einem Ring umgeben, an dessen Stirnfläche sich Schenkel eines den

Magnetfluss leitenden Materials anschließen.

Der Erfindung liegt die Aufgabe zugrunde, eine kostengünstige Vorrichtung zur Erfassung rotatorischer Bewegungen bereitzustellen, welche besonders unempfindlich gegenüber Störungen des zu detektierenden Magnetfeldes ist und darüber hinaus unempfindlich gegenüber den genannten Positionsabweichungen. Es soll ferner der Einfluss der Fertigungstoleranzen auf das Messergebnis minimiert werden.

Die Aufgabe wird durch eine Vorrichtung zum Erfassen rotatorischer Bewegungen gelöst, die die Merkmale des Anspruchs 1 oder 13 aufweist.

Die Erfindung besteht im Prinzip also darin, den von dem Geberelement (Permanentmagnet) ausgehenden Magnetfluss über einen ortsfesten Polschuh zu dem magnetfeldempfindlichen Detektor zu leiten. Wegen der hohen magnetischen Leitfähigkeit des Polschuhs ändert sich auch bei einer gegenüber der idealen Lage etwas verschobenen Lage des Geberelements der von dem Detektor gemessene Fluss nur geringfügig.

Besonders vorteilhaft ist, dass bei der erfindungsgemäßen Vorrichtung besonders kleine und daher nicht nur kostengünstige, sondern auch gewichtsoptimierte Magnete als Geberelemente eingesetzt werden können. Die Bündelung des Magnetflusses führt weiterhin zu einer Reduktion des Streufeldes und dessen störende Einwirkungen auf andere magnetempfindliche Bauteile oder -systeme. Schließlich wird der Einfluss externer Störfelder wirksam behindert.

Selbstverständlich schließt die Erfindung nicht aus, dass das Geberelement selber auch mit magnetisch leitendem Material versehen sein kann, so dass es nicht ausschließlich aus dem Kern eines Permanentmagneten bestehen muss. Wichtig aber ist, dass ein ortsfester Polschuh vorgesehen ist, welcher den Fluss weitgehend widerstandsfrei von dem Geberelement zu dem Detektor führt, so dass eine fehlerhafte Lage oder eine unerwünschte Lageänderung des Geberelements den Messwert nur geringfügig verfälscht.

Will man den Aufbau der erfindungsgemäßen Vorrichtung besonders vereinfachen, so wird empfohlen, dass der Detektor in den hinsichtlich des magnetischen Widerstandes weitgehend widerstandsfreien Weg des Magnetflusses geschaltet wird. Obwohl zwischen den fluchtenden Enden und den Flächen des Detektors jeweils ein Luftspalt auftreten kann, so empfiehlt es sich doch, diesen möglichst klein zu halten, so dass das Streufeld zwischen den beiden dem Detektor zugewandten Enden klein gehalten wird. Diesem Ziel dient auch eine möglichst fluchtende Ausrichtung der beiden Polschuhenden. Mit anderen Worten ist der Detektor derart zwischen die beiden Polschuhenden einzufügen, dass die Verluste durch Streufelder möglichst klein werden. Bei der Ausgestaltung der Form der Polschuhe ist zu beachten, dass diese zum Einen bei der zu messenden Lageänderung (Drehlage) des Gebers einen sich möglichst stark ändernden Magnetfluss erhalten. Andererseits soll bei Lageänderungen, die innerhalb des Toleranzbereiches der erfindungsgemäßen Vorrichtungen liegen, die Magnetflussänderung innerhalb der Polschenkel möglichst klein sein.

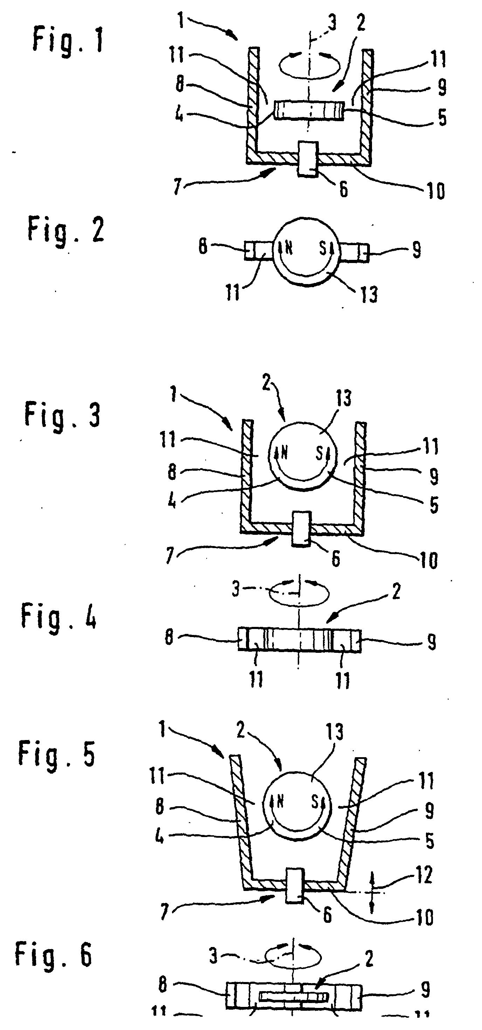

Da die Polschuhe einen großen Teil des von dem Geberelement ausgehenden Magnetflusses einfangen sollen, sollten sie das Geberelement zumindest teilweise umgreifen. Eine besonders einfache Ausgestaltung sieht vor, dass die Polschuhe zwei Schenkel besitzen, die im wesentlichen parallel zueinander verlaufen, welche über Stegteile einen die Schenkel miteinander verbindenden Steg ergeben. Im Verlauf dieses Steges ist bevorzugt der Geber angeordnet, wobei die beiden Polschuhe im wesentlichen die Form eines L haben. Die Drehachse des Geberelements kann dabei sowohl in der Ebene der Polschuhe liegen, oder aber auch senkrecht zu dieser Ebene stehen (Fig. 1, Fig. 3).

Während nun einerseits bei einem parallelen Verlauf der Schenkel der Polschuhe der Geber in der Ebene der Polschuhe verschoben werden kann, ohne dass sich der Magnetfluss in den Polschuhen erheblich ändert, lässt sich nach einer Weiterbildung der Erfindung das Prinzip umkehren, indem eine Lageänderung innerhalb der Polschuhebene zu einer Vergrößerung des Luftspalts und damit zu einer Änderung des mittleren Magnetflusses führt (Fig. 5).

Eine derartige Möglichkeit sieht vor, die beiden Schenkel der Polschuhe schräg zueinander stehen, so dass sich eine im wesentlichen V-förmige Konstruktion ergibt. Entfernt sich der Geber in der Ebene der Polschuhe vom Detektor, so wird der Luftspalt größer und der den Polschuhen zugeführte Magnetfluss im Mittel geringer. Will man die Größe des Luftspalts und damit den Widerstand zwischen Geber und Polschuhen verkleinern, so empfiehlt sich in Weiterbildung der Erfindung eine der Merkmalskombinationen nach Anspruch 14 bis 16. Hinsichtlich der Erfindung ergibt sich nur insofern eine Einschränkung, als Bewegungen des Geberelements innerhalb der Ebene der Polschuhe einen etwas größeren Einfluss auf die Änderung des Messwertes haben, während Bewegungen quer zur Polschuhebene von geringerem Einfluss auf das Messergebnis sind. Der Kern der Erfindung wird hiervon aber nicht berührt.

Weitere vorteilhafte Ausbildungen der Erfindung ergeben sich aus den Unteransprüchen. Die Erfindung wird nachstehend anhand von Ausführungsbeispielen, die in den Figuren dargestellt sind, näher beschrieben. Es zeigen:
- Fig. 1: eine Prinzipskizze einer Vorrichtung in Seitenansicht teilweise im Schnitt;
- Fig. 2: eine Draufsicht auf die Vorrichtung gemäss Fig. 1;
- Fig. 3: eine Prinzipskizze einer zweiten Vorrichtung in Seitenansicht;
- Fig. 4: eine Draufsicht auf die Vorrichtung gemäss Fig. 3;
- Fig. 5: in Seitenansicht eine Prinzipskizze eines dritten Ausführungsbeispiels;
- Fig. 6: eine Draufsicht auf eine Vorrichtung gemäß Fig. 5;
- Fig. 7,8 und 9: drei weitere Ausführungsbeispiele in Seitenansicht der erfindungsgemäßen Vorrichtung.
- Fig. 10,11: die Möglichkeit einer diametralen und radialen Magnetisierung des Geberelementes nach einem der vorangegangenen Beispiele

Eine Vorrichtung zum Erfassen rotatorischer Bewegungen umfaßt gemäß Fig. 1 ein magnetisch wirksames Geberelement 2, das um eine Drehachse 3 bewegbar insbesondere drehbar angeordnet ist. Das Geberelement 2 ist vorzugsweise ein Permanentmagnet mit einem magnetischen Nord- und Südpol 4,5. Die Vorrichtung 1 umfaßt darüber hinaus einen magnetfeldempfindlichen Detektor 6 zur Sensierung der Magnetfeldänderung, die bei Rotation des Geberelementes 2 von diesem ausgehen. Als Detektor 6 kommen insbesondere Hall-Elemente oder andere Einrichtungen in Frage, welche eine von der Änderung eines Magnetflusses abhängige Spannung abgeben oder eine von der Größe des Magnetflusses abhängige physikalische Größe anzeigen. An den Detektor 6 ist ferner eine Einrichtung 7 zur Bündelung des Magnetfeldes vorgesehen, welche Schenkel 8,9 und Stegabschnitte besitzen, welche zusammen einen Steg 10 bilden. Die beiden parallel zueinander und parallel zur Drehachse 3 angeordneten Schenkel 8,9 umgreifen und übergreifen das Geberelement 2 zumindest teilweise und zusammen mit dem Steg 10 U-förmig, wodurch eine starke Konzentration des Magnetflusses innerhalb der Einrichtung 7 erreicht wird. Die Übertragung des vom Geberelement 2 ausgehenden magnetischen Feldes über die polschuhartigen Schenkel 8,9 sowie den Steg 10 führt zu einer Verringerung der Fehlereinflußgrößen, die beispielsweise durch Exzentrizität des Geberelementes 2 bzw. durch Radialspiel oder Axialspiel des Geberelementes 2 verursacht sind, weil der die Feldstärke beeinflussende Gesamtluftspalt zwischen dem Geberelement 2 und den Schenkeln 8,9 unabhängig von den genannten Lage- und Positionsabweichungen konstant bleibt. Das Ausführungsbeispiel gemäß Fig. 1 ist besonders unempfindlich hinsichtlich axialer Verschiebungen des Geberelementes gegenüber dem Detektor 6, was erreicht wird durch vergleichsweise lange parallele Schenkel 8,9. Dies ermöglicht ferner die Verwendung eines dünnen Geberelementes 2, beispielsweise in Form einer magnetisierten Scheibe, wobei ein derartiger Magnet klein und kostengünstig ist.

Wie die Fig. 1 und 2 zeigen, ist das Geberelement 2 mittig zwischen den Schenkeln 8,9 angeordnet und weist die Form einer diametral magnetisierten Scheibe 13 auf. Gemäß Fig. 1 ist der Detektor 6 mittig an dem die beiden Schenkel 8,9 miteinander verbindenden Steg 10 angeordnet. Die Figuren 3,4 zeigen ein Ausführungsbeispiel der Erfindung, daß die gleichen Bauteile wie die Vorrichtung gemäß Fig. 1 und 2 aufweist. Dementsprechend sind gleiche Bauteile mit den gleichen Bezugsziffern bezeichnet. Auch bei diesem Ausführungsbeispiel bleibt der Gesamtluftspalt 11 konstant, wenn die Scheibe in der Ebene der Schenkel innerhalb eines vorgesehenen Größenbereichs verschoben wird. Im Unterschied zu Fig. 1 und 2 sind die Schenkel 8,9 rechtwinklig zur Drehachse 3 angeordnet. Die Einrichtung 7 mit den Schenkeln 8,9 sowie mit dem Steg 10 umgreift hierbei einen Großteil des Umfangs der als Geberelement 2 vorgesehenen magnetischen Scheibe, wodurch eine noch stärkere Bündelung des magnetischen Feldes eintritt, was zu einer weiteren Reduzierung des Einflusses von Störungen führt. Bei gleicher Magnetfeldstärke können hierbei noch kleinere Magnete verwendet werden als nach dem Ausführungsbeispiel nach Fig. 1. Ein weiterer Vorteil liegt in der stark reduzierten Bauhöhe begründet.

Die Fig. 5 und 6 zeigen ein weiteres Ausführungsbeispiel der Erfindung, bei dem die Schenkel 8,9 schräg zueinander angeordnet sind. Die Schenkel 8,9 umgreifen zusammen mit den aus den beiden Stegabschnitten gebildeten Steg 10 wesentliche Teile des Umfangs des Geberelementes 2 und durch die Schrägstellung der Schenkel 8,9 verjüngt sich der Zwischenraum zwischen den Schenkeln in Richtung auf den Steg 10. Die Kalibrierung dieser Vorrichtung wird erzielt durch die Einstellung des Luftspaltes 11 zwischen dem Geberelement und den beiden Schenkeln 8,9. Dies kann beispielsweise dadurch erfolgen, daß die Einrichtung 7 in Richtung 12 relativ zum Geberelement 2 verschoben wird. Grundsätzlich ist aber auch eine Verschiebung des Geberelementes in Richtung des Doppelpfeils 12 relativ zur Vorrichtung 7 möglich. Wie Fig. 6 ferner zeigt, kann durch die breiten Schenkel 8,9 ein in Drehachsenrichtung dünnes Geberelement 2 verwendet werden (Kreisscheibe), was zu einem weiter verbesserten Betriebsverhalten und stark verringerten Kosten führt. Bei einer Weiterentwicklung der Erfindung erfolgt eine besonders einfache und kostengünstige Kalibrierung der Vorrichtung 1 durch Einstellung des als Hall-Element ausgebildeten Detektors 6. Hierdurch kann ggf. eine Verschiebung der Vorrichtung 7 oder des Geberelements 2 entfallen.

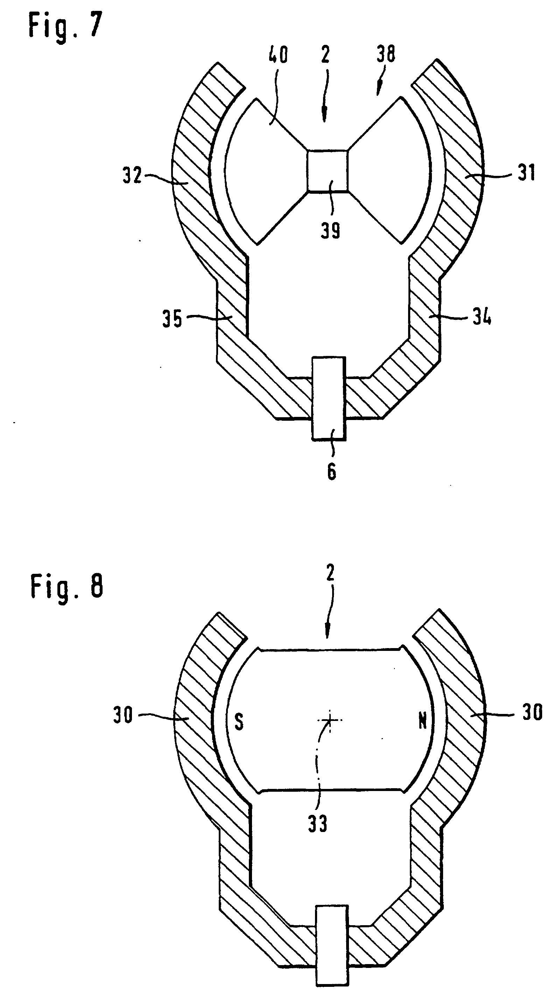

Die Fig. 7,8 und 9 zeigen drei weitere Ausführungsbeispiele der Erfindung. Dabei wurde großer Wert darauf gelegt, daß sich mit einer Drehbewegung des Geberelements 2 eine vergleichsweise starke Änderung des Magnetflusses ergibt. In den Fig. 7,8 und 9 sind die dem Detektor 6 abgewandten Polschuhenden 31,32 in Form eines Kreisabschnitts gekrümmt ausgestaltet, wobei die Polschuhenden 31,32 in Schenkelabschnitte 34,35 übergehen, die in etwa mit den Schenkeln 8 und 9 in Fig. 1 vergleichbar sind. Über die Schenkelabschnitte 34,35 wird ein größerer Abstand des Detektors 6 von dem Geber 2 erreicht. Hierdurch wird der magnetische Fluß in den Polschuhen nicht nur durch den großen magnetischen Widerstand der Ausnehmung 38 zwischen den Polschuhenden 31,32 vergrößert, sondern auch durch den durch die Schenkelabschnitte 34,35 umfaßten Raum, der ebenfalls einen großen Widerstand für das Magnetfeld bildet. Das gilt insbesondere für den Fall, daß der Detektor 2 eine gegenüber der gezeigten Stellung geänderte Lage von + 90 Grad oder - 90 Grad hat. In diesen Lagen ist das Magnetfeld und damit der durch die Polschuhe geführte Magnetfluß in seinem Absolutwert besonders klein. In den Lagen zwischen der zuletzt geschilderten Position und der in Fig. 8 dargestellten Position mit besonders großem Magnetfluß ändert sich der Magnetfluß in den Polschuhen stetig, so daß der Drehwinkel des Gebers oder seiner Winkelstellung sich über den Detektor 6 je nach dessen Ausgestaltung (z.B. Galvanometer oder Hall-Element) bestimmt werden kann. In Fig. 7 ist der Detektor 2 aus einem Magnetkern (z.B. aus AlNiCo) 39 und im wesentlichen kreissektorförmigen Ansätzen 40 aus magnetisch leitendem Material gebildet, so daß diese Ansätze 40 beispielsweise aus Eisen bestehen können.

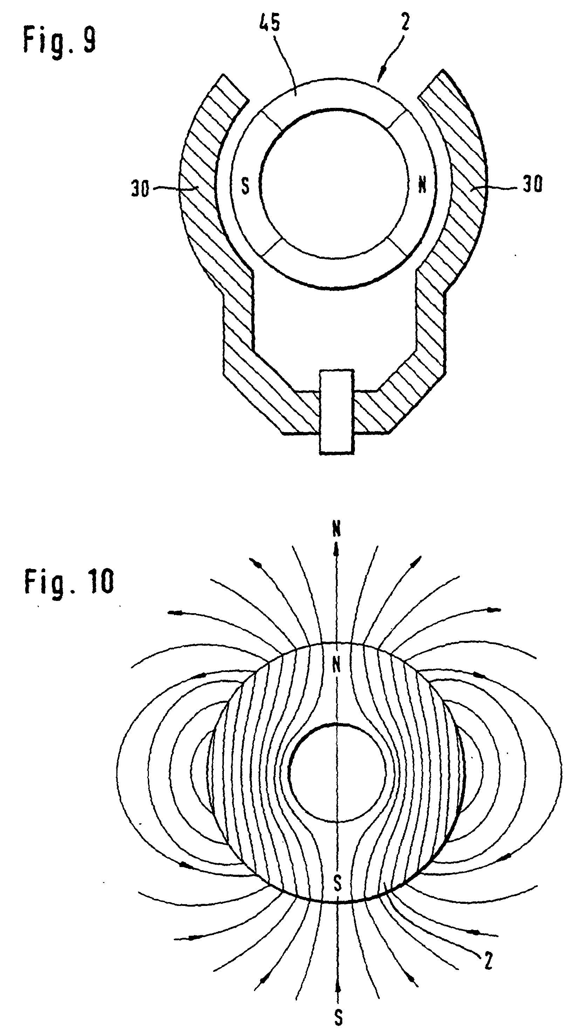

Bei dem Ausführungsbeispiel nach Fig. 8 sind ebenso wie bei dem Ausführungsbeispiel nach Fig. 9 und 7 gleichartig ausgestaltete Polschuhe vorgesehen, in welche in der weiter oben beschriebenen Form eine Magnetfeldsonde (z.B. Hall-Element) eingefügt ist. Im Unterschied zu Fig. 7.ist in Fig. 8 der Geber 2 aus einer radial magnetisierten Scheibe gebildet, an der zwei gegenüberliegende Kreisabschnitte abgeschliffen oder abgetrennt sind. Die Scheibe ist wiederum mit zwei Polen S und N versehen, die Wirkungsweise der Vorrichtung nach Fig. 8 gleicht der nach Fig. 7. Die Polschuhe 30 können wiederum aus massivem Eisen gebildet sein.

Schließlich ist in Fig. 9.der Geber 2 aus einem teilweise magnetisierten Ring 45 gebildet, der wieder einen Nordpol N und einen Südpol S besitzt, in dem dieser Ring auf gegenüberliegenden Seiten dementsprechend magnetisiert wurde. Statt des Ringes kann aber auch eine volle Scheibe verwendet werden, die eine der Magnetisierung des Rings 45 in etwa entsprechende Magnetisierung besitzt.

Figur 10 zeigt die Möglichkeit einer diametralen Magnetisierung des Geberelementes 2. Dabei sind mit S und N Bezirke angegeben, die bevorzugt magnetisiert werden sollten, um den gewünschten Verlauf der Magnetisierungslinien auf dem ringförmigen Geberelement zu erhalten. Das Geberelement kann aber auch eine Scheibe sein.

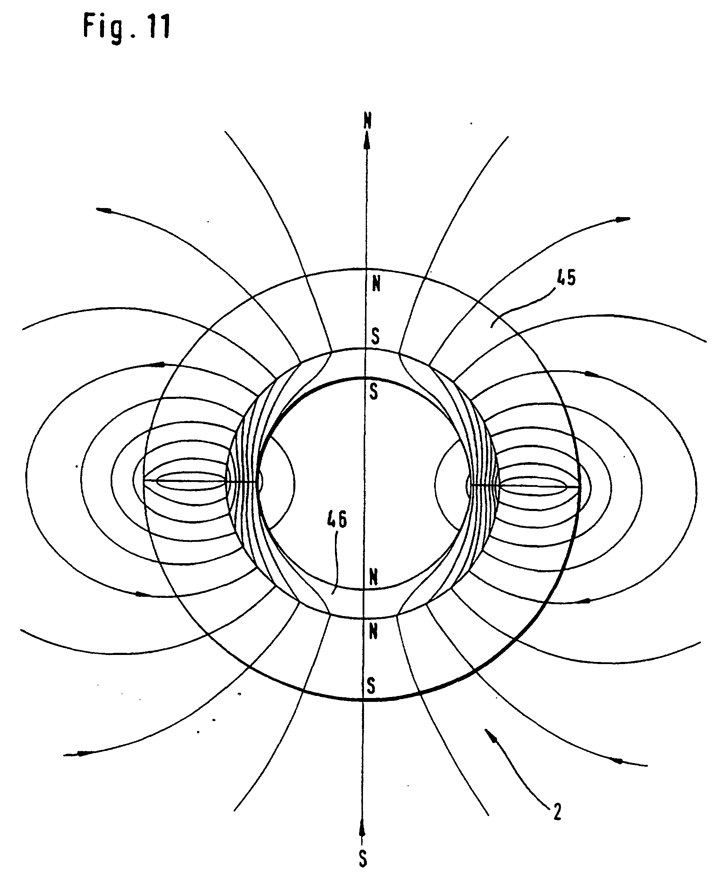

Figur 11 zeigt die Möglichkeit einer sogenannten radialen Magnetisierung, bei der die Magnetflußlinien bevorzugt radial aus dem äußeren Rand des Geberelementes 2 austreten sollen. Hierzu setzt sich das Geberelement aus einem aus magnetisierbarem Material gebildeten äußeren Ring 45 und einem inneren Ring 46 zusammen, die aneinander grenzen bzw. konzentrisch ineinander gefügt sind. Der innere Ring 46 ist aus magnetisch leitendem Material wie Eisen. In Figur 11 mit den Bezirken S und N die Bereiche angedeutet, die bevorzugt zu magnetisieren sind, um den gewünschten Verlauf der Magnetlinien zu erhalten. Der innere Ring kann auch als Scheibe aus z.B. Eisen ausgestaltet sein.

Die Erfindung läßt sich daher kurz wie folgt angeben:

Um rotatorische Bewegungen zu erfassen, werden bisher oft Potentiometer eingesetzt. Diese kontaktbehafteten Sensoren werden zunehmend von kontaktlosen Sensoren verdrängt. Ein weit verbreitetes Prinzip ist die Bestimmung des Magnetfeldes eines rotierenden Magnetes. Im allgemeinen wird dazu das Magnetfeld einer diametralen magnetisierten Scheibe unmittelbar mit einem magnetfeldempfindlichen Element erfaßt. wird die Magnetscheibe gedreht, detektiert das magnetfeldempfindliche Element eine Änderung des aktuellen Magnetfel-des (siehe Abbildung 1). Dieses verbreitete Prinzip hat jedoch mehrere gravierende Nachteile:
- die Exzentrizität der Magnetscheibe wirkt sich auf das Signal aus,
- die Abweichungen von der Diametralität des Magnetfeldes wirkt sich auf das Signal aus,
- es besteht eine hohe Empfindlichkeit gegenüber Axialund Radialspiel der Magnetscheibe.

Aus den oben genannten Gründen wird im folgenden ein Konzept vorgestellt, mit dem die Eigenschaften des rotatorischen Positionssensors drastisch verbessert werden können. Dieser Sensor besteht ebenfalls aus einer diametral magnetisierten Scheibe, deren Position erfaßt wird. Jedoch unterscheidet sich der Positionssensor dadurch, daß das Magnetfeld der Scheibe nicht direkt sondern mit Hilfe von sogenannten Polschuhen an das magnetfeldempfindliche Element geleitet wird. Die Zeichnung zeigt Vorschläge für einen Positionssensor mit Polschuhen. Es gibt im wesentlichen zwei möglichen Anordnungen:
1. Drehachse der Magnetscheibe parallel zu den Polschuhen.
2. Drehachse der Magnetscheibe senkrecht zu den Polschuhen.

Eine Anordnung mit Polschuhen zeigt wesentliche Vorteile gegenüber einer Anordnung, bei der das Magnetfeld direkt detektiert wird:
- die Exzentrizität der Magnetscheibe hat einen vergleichbar kleinen Einfluß auf das Ausgangssignal; durch die Polschuhe wird das Magnetfeld über einen größeren räumlichen Bereich gemittelt, somit wirken sich Fehler in der Diametralität des Magnetfeldes weniger stark aus;
- das Radialspiel der Magnetscheibe wird durch die Polschuhe weitgehend kompensiert;
- mit Polschuhen wird der Einfluß des Axialspiels auf das Signal reduziert;
- bei einer Anordnung mit Polschuhen können kleinere und damit kostengünstigere Magnete verwendet werden.

Weiterhin können sehr flache Magnetscheiben gewählt werden, da breitere Polschuhe die Empfindlichkeit bezüglich des Axialspiels reduzieren.

Mit der Anordnung nach Figuren 3,4, d.h. Polschuhe senkrecht zur Drehachse, wird ein sehr kleines Bauvolumen erreicht. Außerdem ergibt sich in dieser Anordnung eine stärkere räumliche Mittelung der Magnetfeldstärke und damit eine Reduzierung des Einflusses von Störungen wie z.B. reduzierte Empfindlichkeit auf Exzentrizität.

Die Empfindlichkeitsgrade der einzelnen Exemplare der magnetfeldempfindlichen Elemente streuen untereinander, außerdem variiert die Feldstärke der magnetisierten Scheibe. Deshalb muß eine Möglichkeit vorgesehen werden, um eine Kalibrierung des gesamten Sensors durchführen zu können. Die hier vorgestellte Lösung beruht darauf, daß die Feldstärke an dem magnetfeldempfindlichen Element von dem gesamten Luftspalt des magnetischen Kreises abhängt.

Zur Kalibrierung eines magnetfeldbasierenden Positionssensors sollte daher der Luftspalt einstellbar sein. Dieses Prinzip kann z.B. auf die beiden Möglichkeiten in Figur 1,2 und 3,4 angewandt werden. Besonders vorteilhaft ist eine Anordnung wie sie in Figur 5,6 vorgestellt wird. Diese Abbildung beschreibt einen Positionssensor mit Polschuhen, dessen Abstand mit zunehmender Distanz von dem magnetfeldempfindlichen Element zunimmt. Damit kann durch eine Variation der relativen Lage zwischen Polschuhen mit magnetfeld-empfindlichem Element und der Magnetscheibe die gesamte Charakteristik des Sensors kalibriert werden.

Eine relativ einfache und kostengünstige Kalibrierung kann somit durchgeführt werden, wobei die beschriebenen Vorteile von magnetfeldbasierenden Sensoren mit Polschuhen erhalten bleiben.

## Patentansprüche

1. Vorrichtung zum Erfassen rotatorischer Bewegungen mit mindestens einem um eine Drehachse (3) bewegbar angeordneten magnetisch wirksamen Geberelement (2) und mindestens einem magnetfeldempfindlichen Detektor (6), welcher mit einem von der Drehwinkelstellung des magnetischen Geberelementes gegenüber dem Detektor abhängigen Magnetfluss beaufschlagt wird, wobei an dem vorzugsweise als Hall-Element ausgestalteten Detektor (6) mindestens ein Polschuh (9, 10) angrenzt, über den der zu messende Magnetfluss geführt ist, wobei der Detektor (6) und der Polschuh (9, 10) ortsfest angeordnet sind, **dadurch gekennzeichnet, dass** die dem Detektor (6) abgewandten Polschuhenden in Form eines Kreisringabschnittes (31, 32) ausgebildet sind, dass das Geberelement (2) durch einen Magnet (39) gebildet ist, welcher um einen Mittelpunkt (33) der Kreisringabschnitte (31, 32) drehbar ist, dass an die Pole des Magneten (39) im wesentlichen kreissektorförmige Polschuhe (40) angesetzt sind, wobei die Kontur der Polschuhe derart kreisförmig ausgestaltet ist, dass die lichte Weite des Luftspalts zwischen den Polschuhen und der Innenkontur der Kreisringabschnitte (31, 32) konstant ist.

2. Vorrichtung nach Anspruch 1, **dadurch gekennzeichnet, dass** zu beiden Seiten des Detektors (6) jeweils ein Polschuh (8, 10 bzw. 9, 10) angrenzt, wobei die dem Detektor (6) zugewandten Enden (10) der Polschuhe (8, 10 bzw. 9, 10) im wesentlichen miteinander fluchten und wobei die beiden Polschuhe das drehbare Geberelement (2) zumindest teilweise umgreifen.

3. Vorrichtung nach einem oder mehreren der vorhergehenden Ansprüche, **dadurch gekennzeichnet, dass** die beiden Polschuhe (8, 10 bzw. 9, 10) Schenkel (8, 9) und Stegabschnitte (10) besitzen, die das Geberelement (2) U-förmig umgreifen.

4. Vorrichtung nach Anspruch 3, **dadurch gekennzeichnet, dass** die Schenkel (8, 9) parallel zueinander angeordnet sind.

5. Vorrichtung nach Anspruch 3, **dadurch gekennzeichnet, dass** die Schenkel (8, 9) schräg zueinander angeordnet sind.

6. Vorrichtung nach einem oder mehreren der Ansprüche 3 bis 5, **dadurch gekennzeichnet, dass** die Schenkel (8, 9) parallel zur Drehachse (3) des Geberelementes an geordnet sind.

7. Vorrichtung nach einem oder mehreren der Ansprüche 3 bis 5, **dadurch gekennzeichnet, dass** die Schenkel (8, 9) rechtwinklig zur Drehachse (3) angeordnet sind.

8. Vorrichtung nach einem oder mehreren der Ansprüche 3 bis 7, **dadurch gekennzeichnet, dass** das Geberelement (2) mittig zwischen den Schenkeln (8, 9) angeordnet ist.

9. Vorrichtung nach einem oder mehreren der vorhergehenden Ansprüche, **dadurch gekennzeichnet, dass** das Geberelement (2) eine diametral magnetisierte Scheibe (13) oder eine radial magnetisierte Scheibe ist.

10. Vorrichtung nach einem oder mehreren der vorhergehenden Ansprüche, **dadurch gekennzeichnet, dass** der Detektor (6) mittig an dem die beiden Schenkel (8, 9) miteinander verbindenden Steg (10) angeordnet ist.

11. Vorrichtung nach einem oder mehreren der vorhergehenden Ansprüche, **dadurch gekennzeichnet, dass** der Luftspalt (11) zwischen den Schenkeln (8, 9) und dem Geberelement (2) einstellbar ist mittels Verschieben der Vorrichtung (7) relativ zu dem Geberelement (2).

12. Vorrichtung nach einem oder mehreren der vorhergehenden Ansprüche, **dadurch gekennzeichnet, dass** der Detektor im Raum einstellbar ausgebildet ist.

13. Vorrichtung zum Erfassen rotatorischer Bewegungen mit mindestens einem um eine Drehachse (3) bewegbar angeordneten magnetisch wirksamen Geberelement (2) und mindestens einem magnetfeldempfindlichen Detektor (6), welcher mit einem von der Drehwinkelstellung des magnetischen Geberelementes gegenüber dem Detektor abhängigen Magnetfluss beaufschlagt wird, wobei an dem vorzugsweise als Hall-Element ausgestalteten Detektor (6) mindestens ein Polschuh (9, 10) angrenzt, über den der zu messende Magnetfluss geführt ist, wobei der Detektor (6) und der Polschuh (9, 10) ortsfest angeordnet sind, **dadurch gekennzeichnet**, **dadurch gekennzeichnet, dass** die dem Detektor (6) abgewandten Polschuhenden in Form eines Kreisringabschnittes (31, 32) ausgebildet sind, dass das Geberelement (2) durch einen Magnet (39) gebildet ist, dass das Geberelement (2) durch einen Kreisring (45) oder eine Kreisscheibe gebildet ist, die an radial gegenüberliegenden Bereichen magnetisiert ist, wobei die Kontur des Außenumfangs des Rings bzw. der Scheibe derart kreisförmig ausgestaltet ist, dass die lichte Weite des Luftspaltes zwischen den Polenden und der Innenkontur der Kreisringabschnitte (31, 32) konstant ist.

## Claims

1. A device for detecting rotary movements, having at least one magnetically effective transducer element (2) disposed movably about an axis of rotation (3), and having at least one magnetic-field-sensitive detector (6), which is acted upon by a magnetic flux that is dependent on the rotary angle position of the magnetic transducer element relative to the detector, wherein at least one pole piece (9, 10), by way of which the magnetic flux to be measured is guided, adjoins the detector (6), the detector being designed preferably as a Hall element, and the detector (6) and the pole piece (9, 10) are disposed in stationary fashion, **characterized in that** the pole piece ends remote from the detector (6) are embodied in the form of a circular-annular portion (31, 32); that the transducer element (2) is formed by a magnet (39), which is rotatable about a center point (33) of the circular-annular portions (31, 32); and that essentially circular-sector- shaped pole pieces (40) are placed against the poles of the magnet (39), and the contour of the pole pieces is designed in circular form, in such a way that the inside diameter of the air gap between the pole pieces and the inner contour of the circular-annular portions (31, 32) is constant.

2. The device of claim 1, **characterized in that** one pole piece (8, 10; 9, 10) adjoins each of the two sides of the detector (6), and the ends (10) toward the detector (6), of the pole pieces (8, 10; 9, 10) are essentially aligned with one another, and the two pole pieces at least partly embrace the rotatable transducer element (2).

3. The device of one or more of the foregoing claims, **characterized in that** the two pole pieces (8, 10; 9, 10) have legs (8, 9) and crosspieces (10), which in U-shaped fashion embrace the transducer element (2).

4. The device of claim 3, **characterized in that** the legs (8, 9) are disposed parallel to one another.

5. The device of claim 3, **characterized in that** the legs (8, 9) are disposed obliquely to one another.

6. The device of one or more of claims 3-5, **characterized in that** the legs (8, 9) are disposed parallel to the axis of rotation (3) of the transducer element.

7. The device of one or more of claims 3-5, **characterized in that** the legs (8, 9) are disposed perpendicular to the axis of rotation (3).

8. The device of one or more of claims 3-7, **characterized in that** the transducer element (2) is disposed centrally between the legs (8, 9).

9. The device of one or more of the foregoing claims, **characterized in that** the transducer element (2) is a diametrically magnetized disk (13), or a radially magnetized disk.

10. The device of one or more of the foregoing claims, **characterized in that** the detector (6) is disposed centrally on the crosspiece (10) that joins the two legs (8, 9) to one another.

11. The device of one or more of the foregoing claims, **characterized in that** the air gap (11) between the legs (8, 9) and the transducer element (2) is adjustable by means of displacement of the device (7) relative to the transducer element (2).

12. The device of one or more of the foregoing claims, **characterized in that** the detector is embodied adjustably in space.

13. A device for detecting rotary movements, having at least one magnetically effective transducer element (2) disposed movably about an axis of rotation (3), and having at least one magnetic-field-sensitive detector (6), which is acted upon by a magnetic flux that is dependent on the rotary angle position of the magnetic transducer element relative to the detector, wherein at least one pole piece (9, 10), by way of which the magnetic flux to be measured is guided, adjoins the detector (6), the detector being designed preferably as a Hall element, and the detector (6) and the pole piece (9, 10) are disposed in stationary fashion, **characterized in that** the pole piece ends remote from the detector (6) are embodied in the form of a circular-annular portion (31, 32); that the transducer element (2) is formed by a magnet (39); and that the transducer element (2) is formed by a circular ring (5) or a circular disk which is magnetized in radially opposed regions, and the contour of the outer circumference of the ring or disk is designed in circular form, in such a way that the inside diameter of the air gap between the pole ends and the inner contour of the circular-annular portions (31, 32) is constant.

## Revendications

1. Dispositif pour l'enregistrement de mouvements de rotation avec au moins un élément transmetteur (2) efficace au plan magnétique et disposé de façon mobile autour d'un axe de rotation (3) et au moins un détecteur (6) sensible au champ magnétique, lequel est sollicité avec un flux magnétique dépendant de la position d'angle de rotation de l'élément transmetteur magnétique par rapport au détecteur, au moins une pièce polaire (9, 10) étant contiguë au détecteur (6) conçu de préférence comme un élément de Hall, pièce par laquelle le flux magnétique à mesurer est guidé, le détecteur (6) et la pièce polaire (9, 10) étant disposés de façon fixe, **caractérisé en ce que** les extrémités de pièce polaire, opposées au détecteur (6), sont conçues sous la forme d'une partie d'anneau de cercle (31, 32), **en ce que** l'élément transmetteur (2) est formé par un aimant (39), qui peut tourner autour d'un centre (33) des parties de l'anneau de cercle (31, 32), **en ce que** des pièces polaires (40) sensiblement en forme de secteur circulaire sont placées sur les pôles de l'aimant (39), le contour des pièces polaires étant conçu de préférence avec une forme circulaire de telle sorte que la largeur intérieure de l'entrefer entre les pièces polaires et le contour intérieur des parties d'anneau de cercle (31, 32) est constante.

2. Dispositif selon la revendication 1, **caractérisé en ce qu'**une pièce polaire (8, 10 et 9, 10) est contiguë à chacun des deux côtés du détecteur (6), les extrémités (10), tournées vers le détecteur (6), des pièces polaires (8, 10 et 9, 10) sont sensiblement alignées entre elles et les deux pièces polaires entourant au moins partiellement l'élément transmetteur (2) rotatif.

3. Dispositif selon l'une quelconque ou plusieurs des revendications précédentes, **caractérisé en ce que** les deux pièces polaires (8, 10 et 9, 10) présentent des branches (8, 9) et des parties de nervure (10), qui entourent l'élément transmetteur (2) en forme de U.

4. Dispositif selon la revendication 3, **caractérisé en ce que** les branches (8, 9) sont disposées parallèlement entre elles.

5. Dispositif selon la revendication 3, **caractérisé en ce que** les branches (8, 9) sont disposées de façon inclinée l'une par rapport à l'autre.

6. Dispositif selon l'une quelconque ou plusieurs des revendications 3 à 5, **caractérisé en ce que** les branches (8, 9) sont disposées parallèlement à l'axe de rotation (3) de l'élément transmetteur.

7. Dispositif selon l'une quelconque ou plusieurs des revendications 3 à 5, **caractérisé en ce que** les branches (8, 9) sont disposées perpendiculairement à l'axe de rotation (3).

8. Dispositif selon l'une quelconque ou plusieurs des revendications 3 à 7, **caractérisé en ce que** l'élément transmetteur (2) est disposé de façon centrée entre les branches (8, 9).

9. Dispositif selon l'une quelconque ou plusieurs des revendications précédentes, **caractérisé en ce que** l'élément transmetteur (2) est un disque (13) diamétralement magnétisé ou un disque radialement magnétisé.

10. Dispositif selon l'une quelconque ou plusieurs des revendications précédentes, **caractérisé en ce que** le détecteur (6) est disposé au centre sur la nervure (10) reliant les deux branches (8, 9) entre elles.

11. Dispositif selon l'une quelconque ou plusieurs des revendications précédentes, **caractérisé en ce que** l'entrefer (11) entre les branches (8, 9) et l'élément transmetteur (2) est réglable par déplacement du dispositif (7) par rapport à l'élément transmetteur (2).

12. Dispositif selon l'une quelconque ou plusieurs des revendications précédentes, **caractérisé en ce que** le détecteur est conçu de façon réglable dans l'espace.

13. Dispositif pour l'enregistrement de mouvements de rotation avec au moins un élément transmetteur (2) efficace au plan magnétique et disposé de façon mobile autour d'un axe de rotation (3) et au moins un détecteur (6) sensible au champ magnétique, lequel est alimenté avec un flux magnétique dépendant de la position d'angle de rotation de l'élément transmetteur magnétique par rapport au détecteur, au moins une pièce polaire (9, 10) étant contiguë au détecteur (6) conçu de préférence comme un élément de Hall, pièce par laquelle le flux magnétique à mesurer est guidé, le détecteur (6) et la pièce polaire (9, 10) étant disposés de façon fixe, **caractérisé en ce que** les extrémités de pièce polaire, opposées au détecteur (6), sont conçues sous la forme d'une partie d'anneau de cercle (31, 32), **en ce que** l'élément transmetteur (2) est formé par un aimant (39), **en ce que** l'élément transmetteur (2) est formé par un anneau de cercle (45) ou un disque de cercle, qui peut être magnétisé sur des zones radialement opposées, le contour du pourtour extérieur de l'anneau ou du disque étant conçu avec une forme circulaire de telle sorte que la largeur intérieure de l'entrefer entre les extrémités de pôle et le contour intérieur des parties d'anneau de cercle (31, 32) est constante.
